# EUROPÄISCHE PATENTANMELDUNG

(11) **EP 4 400 703 A1**
(43) Veröffentlichungstag der Anmeldung: **17.07.2024**
(21) Anmeldenummer: 23020011.5
(22) Anmeldetag: 11.01.2023
(51) Int. Cl.: F02C 7/224, F01K 23/10

(54) **GASTURBINENPROZESS MIT VORWÄRMUNG UND DAMPFBELADUNG VON BRENNGAS SOWIE GASTURBINE**

(71) Anmelder: Linde GmbH, 82049 Pullach (DE)
(72) Erfinder: Schwarzhuber, Josef, 82049 Pullach (DE); Haselsteiner, Thomas, 82049 Pullach (DE); Hilz, Jochen, 82049 Pullach (DE)
(74) Vertreter: Fischer, Werner

(57) **Zusammenfassung**

Die Erfindung betrifft einen Gasturbinenprozess sowie ein zu dessen Durchführung geeignete Gasturbine (G), wobei ein vorgewärmter Brennstoff, Wasserdampf sowie über einen Verdichter (V) komprimierte Luft (1) in eine Brennkammer (B) eingeleitet werden, um bei Verbrennungsdruck den Brennstoff mit Luftsauerstoff zu oxidieren und ein heißes Rauchgas (4) zu erzeugen, das in einer Expansionsturbine (T) arbeitsleistend entspannt wird, wobei die Wärme des entspannten Rauchgases (5) dazu genutzt wird, Wasserdampf für die Einleitung in die Brennkammer durch Verdampfung von Kesselwasser (7) zu erzeugen. Kennzeichnend hierbei ist, dass dem Kesselwasser (7) vor seiner Verdampfung Brennstoff (10) zugemischt wird, um ein mit Wasserdampf gesättigtes Brennstoff-Dampf-Gemisch (14) für die Einleitung in die Brennkammer (B) zu erhalten.

## Beschreibung

Die Erfindung betrifft einen Gasturbinenprozess, bei dem ein vorgewärmter Brennstoff, Wasserdampf sowie über einen Verdichter komprimierte Luft in eine Brennkammer eingeleitet werden, um bei Verbrennungsdruck den Brennstoff mit Luftsauerstoff zu oxidieren und ein heißes Rauchgas zu erzeugen, das in einer Expansionsturbine arbeitsleistend entspannt wird, wobei die Wärme des entspannten Rauchgases dazu genutzt wird, Wasserdampf für die Einleitung in die Brennkammer durch Verdampfung von Kesselwasser zu erzeugen.

Weiterhin betrifft die Erfindung eine zur Durchführung des erfindungsgemäßen Prozesses geeignete Gasturbine.

Der Gasturbinenprozess (GT-Prozess) zählt seit vielen Jahren zum Stand der Technik. Gewöhnlich wird dabei Luft in einem Verdichter komprimiert, ehe ihr in einer Brennkammer ein Brennstoff zugemischt wird, der mit dem Luftsauerstoff unter Freisetzung von thermischer Energie reagiert. Das dabei entstehende heiße Rauchgas wird in einer mit dem Verdichter gekoppelten Turbine expandiert, um mechanische Energie bereitzustellen, die sowohl für die Verdichtung der Luft als auch zum Antrieb von Arbeitsmaschinen wie beispielsweise Stromgeneratoren genutzt wird. Thermische Energie, die in dem entspannt aus der Expansionsturbine abströmenden Rauchgas enthalten ist, kann durch Wärmeintegration im GT-Prozess selbst und/oder in einem nachgeschalteten Wasser-Dampf-Kreislauf genutzt werden.

Der Wirkungsgrad des GT-Prozesses steigt mit der Temperatur, mit der das Rauchgas in die Expansionsturbine eintritt. Er ist maximal, wenn die Gasturbine stöchiometrisch betreiben wird, d.h., wenn der Brennkammer genau die für eine vollständige Umsetzung des Brennstoffs benötigte Mindestmenge an Sauerstoff zugeführt wird. Bei einer stöchiometrischen Verbrennung von Erdgas mit Luft würde das erzeugte Rauchgas in die Expansionsturbine mit ca. 1900°C eintreten, einer Temperatur, der heute verfügbare Werkstoffe nicht dauerhaft standhalten können. Die Qualität der im Heißgaspfad der Gasturbine verwendeten Materialien und der Kühlung der Turbinenschaufeln begrenzt die Temperatur des Rauchgases auf weniger als 1400°C, so dass Luft gewöhnlich im Überschuss zugeführt und die Gasturbinen überstöchiometrisch betreiben wird. Dies beeinträchtigt allerdings den Wirkungsgrad des Prozesses, da ein größerer Anteil der in der Expansionsturbine erzeugten mechanischen Energie für die Kompression der Luft verbraucht wird.

Zur Steigerung von Wirkungsgrad und Leistung des GT-Prozesses sind aus dem Stand der Technik verschiedene Maßnahmen bekannt, die mit mehr oder weniger großen Eingriffen in den Prozess einhergehen und zum Teil erhebliche Modifikationen der Hardware erfordern.

So kann die Wärme des entspannten Rauchgases in einem nachgeschalteten Wasser-Dampf-Kreislauf genutzt werden. Bei dem dann als Gas-und-Dampf- oder GuD-Prozess bezeichneten Verfahren wird mit Hilfe des Rauchgases in einem Abhitzekessel Hochdruckdampf erzeugt, der in einer Dampfturbine arbeitsleistend expandiert wird. Auch diese zusätzlich erzeugte mechanische Energie kann zum Antrieb von Arbeitsmaschinen eingesetzt werden.

Einen geringeren apparativen Aufwand erfordern die Vorwärmung des Brennstoffs, wodurch höherwertige Brennstoffenergie durch im Prozess anfallende Abwärme ersetzen werden kann, und die Zuführung von Wasserdampf in die Brennkammer, was aufgrund des erhöhten Massenstroms und der größeren Wärmekapazität des Rauchgases zu einer erhöhten Leistung der Expansionsturbine führt, ohne dass zusätzliche Verdichterleistung aufgebracht werden muss.

Im Stand der Technik wird der Brennstoff mit Hilfe von Erhitzern vorgewärmt, die in der Brennstoffaufbereitung angeordnet sind und das Abgas von Brennern oder das in der Gasturbine entspannte Rauchgas nutzen. Bekannt ist auch, in einem GuD-Prozess den Brennstoff gegen heißes, aus dem Dampferzeuger abgezweigtes Kesselwasser anzuwärmen.

Der für die Einleitung in die Brennkammer bestimmte Wasserdampf wird entweder in einem allein dafür bestimmten Abhitzekessel unter Nutzung der Wärme des in der Gasturbine entspannten Rauchgases erzeugt und überhitzt oder auf einem hohen Druckniveau dem Wasser-Dampf-Kreislauf eines GuD-Prozesses entnommen und unter erheblichen Exergieverlusten auf den in der Brennkammer herrschenden Verbrennungsdruck entspannt.

Aufgabe der vorliegenden Erfindung ist es, einen Gasturbinenprozess der gattungsgemäßen Art sowie eine Gasturbine zu dessen Durchführung anzugeben, die es ermöglichen, vorgewärmten Brennstoff und Dampf für die Einleitung in die Brennkammer wirtschaftlicher als im Stand der Technik zu erzeugen.

Diese Aufgabe wird seitens des Gasturbinenprozesses erfindungsgemäß dadurch gelöst, dass dem Kesselwasser vor seiner Verdampfung Brennstoff zugemischt wird, um ein Wasserdampf und Brennstoff umfassendes Gasgemisch für die Einleitung in die Brennkammer zu erhalten.

Durch die Erfindung können der angewärmte Brennstoff und der Wasserdampf gemeinsam in einem einzigen Apparat erzeugt werden. Der Einsatz eines separaten Brennstofferhitzers nicht erforderlich ist, weshalb sich gegenüber dem Stand der Technik zumindest die Investitionskosten vermindern.

Durch das Mischen des Kesselwassers mit Brennstoff sinkt der Wasserpartialdruck und mit diesem die Sattdampftemperatur. Das bei der Verdampfung entstehende, mit Wasserdampf gesättigte Brennstoff-Dampf-Gemisch weist daher eine geringere Temperatur auf als reines, bei gleichem Druck verdampftes Kesselwasser. Die Temperatur des Brennstoff-Dampf-Gemisches sinkt mit der Größe des Brennstoffanteils und steigt mit dem Verdampfungsdruck. Beträgt die Sattdampftemperatur 235°C, wenn reines Kesselwasser bei 30 bar verdampft wird, so sinkt sie auf 180°C, wenn der Brennstoffanteil im Brennstoff-Dampf-Gemisch 65Vol.-% beträgt, und auf 120°C, wenn der Brennstoffanteil auf 93Vol.-% erhöht wird.

Die Vorwärmung des Brennstoffs ist bis zu einer Grenztemperatur zulässig, die für gegenwärtig verfügbare Gasturbinen bei 200°C liegt. Außerdem muss der Wasserdampf überhitzt in die Brennkammer der Gasturbine eingeleitet werden, wobei die Turbinenhersteller eine Überhitzung von 15-20°C fordern.

Zweckmäßigerweise wird dem Kesselwasser so viel Brennstoff zugemischt, dass das bei seiner Verdampfung erzeugte, mit Wasserdampf gesättigte Brennstoff-Dampf-Gemisch mit einer Temperatur von weniger als 185°C erhalten wird. Vor der Einleitung in die Brennkammer wird dem Brennstoff-Dampf-Gemisch Wärme zugeführt, um es mit einer Temperatur von weniger als 200°C und um 15-20°C überhitzt in die Brennkammer einzuleiten.

Eine bevorzugte Ausgestaltung des erfindungsgemäßen Verfahrens sieht vor, das mit Wasserdampf gesättigte Brennstoff-Dampf-Gemisch stromaufwärts der Brennkammer gegen in der Expansionsturbine entspanntes Rauchgas zu überhitzen. Wegen der durch die Brennstoffzumischung erreichten Absenkung der Sattdampftemperatur, steht für die Überhitzung ein größerer Temperaturunterschied zum entspannten Rauchgas als im Stand der Technik zur Verfügung, so dass ein höherer Anteil der Rauchgaswärme wirkungsgradsteigernd im Prozess genutzt werden kann.

Um Exergieverluste im Prozess zu minimieren, wird vorgeschlagen, die Verdampfung des mit Brennstoff gemischten Kesselwassers bei einem Druck zwischen 15 und 45bar, bevorzugt zwischen 25 und 35bar durchzuführen, der den Verbrennungsdruck in der Brennkammer nur so weit übertrifft, dass das erzeugte Brennstoff-Dampf-Gemisch der Brennkammer ohne eine über unvermeidlich Leitungsverluste hinausgehende Drosselung zugeführt werden kann. Vorzugsweise ist der Verdampfungsdruck gleichzeitig so hoch, dass eine Verdichtung des Brennstoff-Dampf-Gemisches nicht erforderlich ist, wodurch der Verdampfungsdruck im Wesentlichen dem Verbrennungsdruck in der Brennkammer entspricht.

Eine bevorzugte Ausgestaltung des erfindungsgemäßen GT-Prozesse sieht vor, dass Wasserdampf und Brennstoff für die Brennkammer ausschließlich durch das mit Wasserdampf gesättigte Brennstoff-Dampf-Gemisch zur Verfügung gestellt werden.

Als Brennstoff wird in dem erfindungsgemäßen GT-Prozess vorzugsweise Erdgas eingesetzt. Die Verwendung anderer Brennstoffe wie beispielsweise Wasserstoff, Raffinerieabgase, Erdölbegleitgase, biogen erzeugte flüssige und gasförmige Brennstoffe (Biogas, Biodiesel, Biomethanol, Bioethanol und Mischungen dieser Stoffe) sowie synthetisch erzeugte flüssige und gasförmige Brennstoffe soll jedoch nicht ausgeschlossen sein.

Weiterhin betrifft die Erfindung eine Gasturbine mit einem Verdichter, einer Brennkammer, einer Expansionsturbine sowie einem mit der Brennkammer und der Expansionsturbine strömungstechnisch verbundenen Dampferzeuger, wobei über den Verdichter Luft komprimiert und in die Brennkammer eingeleitet werden kann, um mit einem Brennstoff sowie Wasserdampf bei einem Verbrennungsdruck zu einem heißen Rauchgas umgesetzt zu werden, das nach arbeitsleistender Entspannung in der Expansionsturbine dem Dampferzeuger zuführbar ist, wo seine Wärme dazu genutzt werden kann, Wasserdampf für die Einleitung in die Brennkammer durch Verdampfung von Kesselwasser zu erzeugen.

Die gestellte Aufgabe wird seitens der Gasturbine erfindungsgemäß dadurch gelöst, dass der Dampferzeuger mit einer Brennstoffzuführung ausgeführt ist, über die dem zu verdampfenden Kesselwasser Brennstoff zugemischt werden kann, um ein mit Wasserdampf gesättigtes Brennstoff-Dampf-Gemisch für die Einleitung in die Brennkammer zu erhalten.

Im einfachsten Fall ist die Brennstoffzuführung als Rohr ausgeführt, das mit einer Brennstoffleitung verbunden und zu einem Kesselwasserreservoir hin geöffnet ist. Insbesondere dann, wenn es sich bei dem zuzuführenden Brennstoff um ein Gas handelt, kann es sinnvoll sein, die Brennstoffzuführung als sog. Sparger auszuführen, der die Erzeugung von Brennstoffblasen im Kesselwasser erlaubt.

Vorzugsweise umfasst der Dampferzeuger einen Überhitzer, mit dem das mit Wasserdampf gesättigtes Brennstoff-Dampf-Gemisch stromaufwärts der Brennkammer unter Nutzung der Wärme von in der Expansionsturbine entspanntem Rauchgas überhitzt werden kann, um es mit einer um 15-20°C über der Sattdampftemperatur liegenden Temperatur in die Brennkammer einzuleiten.

Sinnvollerweise ist der Dampferzeuger mit einer Dampftrommel ausgeführt, in die vorgewärmtes Kesselwasser eingeleitet werden kann und in die die Brennstoffzuführung mündet. Sowohl zur Vorwärmung des Kesselwassers als auch zu dessen Verdampfung ist der Dampferzeuger mit Wärmetauschern ausgeführt, in denen vorzugsweise die Wärme von in der Expansionsturbine entspanntem Rauchgas auf das Kesselwasser bzw. auf das mit Brennstoff gemischte Kesselwasser übertragen werden kann.

Eine besonders bevorzugte Ausgestaltung der erfindungsgemäßen Gasturbine sieht vor, dass die Expansionsturbine mit dem Verdichter sowie einer Arbeitsmaschine gekoppelt ist, um diese anzutreiben. Bei der Arbeitsmaschine handelt es sich beispielsweise um einen Stromgenerator oder einen Verdichter.

Im Vergleich zu einem ohne die vorgeschlagene Brennstoffvorwärmung und Dampferzeugung durchgeführten Referenzprozess weist der erfindungsgemäße Gasturbinenprozess einen um bis zu 2% höheren thermischen Wirkungsgrad auf (37,44% satt 36,83%), so dass die gleiche Nutzleitung mit einem deutlich geringeren Brennstoffeinsatz erreicht werden kann.

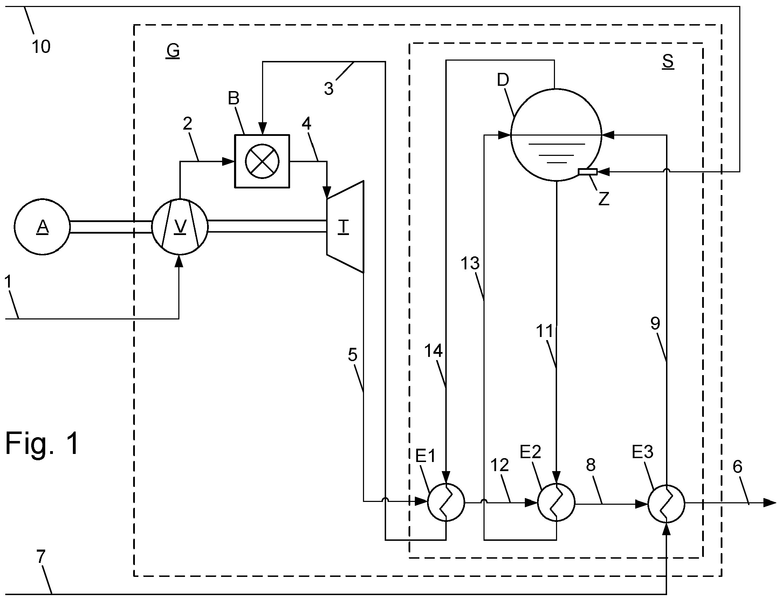

Im Folgenden wird die Erfindung anhand eins in der Figur 1 schematisch dargestellten Ausführungsbeispiels näher erläutert.

Die Figur 1 zeigt eine bevorzugte Ausgestaltung des erfindungsgemäßen Gasturbinenprozesses.

Durch den zur Gasturbine G gehörenden Verdichter V wird Luft 1 angesaugt und mit einem Druck von beispielsweise 30bar über Leitung 2 in die Brennkammer B befördert, wo ihr der Wasserdampf und Brennstoff umfassende Stoffstrom 3 zugemischt wird. Der Brennstoff, bei dem es sich etwa um Erdgas handelt, reagiert exotherm mit dem Sauerstoff der Luft, so dass ein heißes Rauchgas 4 entsteht, das mit einer Temperatur von bis zu 1400°C in die Expansionsturbine T eintritt. Bei seiner Entspannung verrichtet das heiße Rauchgas Arbeit, die zum Antrieb des Verdichters V sowie der Arbeitsmaschine A, bei der es sich beispielsweise um einen Stromgenerators handelt, genutzt wird, mit denen die Entspannungsturbine T gekoppelt ist. Das entspannte, immer noch heiße Rauchgas 5 wird schrittweise in den zum Dampferzeuger S gehörenden Wärmetauschern E1, E2, und E3 abgekühlt, ehe es über Leitung 6 entweder in die Atmosphäre entlassen oder einer weiteren Nutzung zugeführt wird.

Das mit Umgebungstemperatur zugeführte Kesselwasser 7 wird im Wärmetauscher E3 gegen Rauchgas 8 vorgewärmt und anschließend über Leitung 9 in die Dampftrommel D des Dampferzeuger S eingeleitet, in der im Wesentlichen der gleiche Druck wie in der Brennkammer B herrscht. Die Gesamtmenge des im Prozess benötigten Brennstoffs 10 wird über die Brennstoffzuführung Z ebenfalls in die Dampftrommel D geführt, wo er sich im Kesselwasser löst. Über das Fallrohr 11 strömt Flüssigkeit aus der Dampftrommel D zum Wärmetauscher E2, wo ein Teil der Flüssigkeit gegen Rauchgas 12 verdampft wird, so dass ein Flüssigkeits-Dampf-Gemisch entsteht, das zur Trennung in eine Flüssig- und eine Dampfphase über die Steigleitung 13 in die Dampftrommel D zurückströmt. Die Dampfphase 14, bei der es sich um ein mit Wasserdampf gesättigtes Brennstoff-Dampf-Gemisch handelt, wird im Wärmetauscher E1 gegen das Rauchgas 5 um 15-20°C überhitzt und nachfolgend über Leitung 3 in die Brennkammer B geführt.

## Patentansprüche

1. Gasturbinenprozess, bei dem ein vorgewärmter Brennstoff, Wasserdampf sowie über einen Verdichter (V) komprimierte Luft (1) in eine Brennkammer (B) eingeleitet werden, um bei Verbrennungsdruck den Brennstoff mit Luftsauerstoff zu oxidieren und ein heißes Rauchgas (4) zu erzeugen, das in einer Expansionsturbine (T) arbeitsleistend entspannt wird, wobei die Wärme des entspannten Rauchgases (5) dazu genutzt wird, Wasserdampf für die Einleitung in die Brennkammer durch Verdampfung von Kesselwasser (7) zu erzeugen, **dadurch gekennzeichnet, dass** dem Kesselwasser (7) vor seiner Verdampfung Brennstoff (10) zugemischt wird, um ein mit Wasserdampf gesättigtes Brennstoff-Dampf-Gemisch (14) für die Einleitung in die Brennkammer (B) zu erhalten.

2. Gasturbinenprozess nach Anspruch 1, **dadurch gekennzeichnet, dass** die Wärme des in der Expansionsturbine (T) entspannten Rauchgases (5) dazu genutzt wird, das mit Wasserdampf gesättigte Brennstoff-Dampf-Gemisch (14) stromaufwärts der Brennkammer (B) zu überhitzen.

3. Gasturbinenprozess nach einem der Ansprüche 1 oder 2, **dadurch gekennzeichnet, dass** das mit Brennstoff gemischte Kesselwasser (11) bei einem Druck zwischen 15 und 45bar, bevorzugt zwischen 25 und 35bar, der im Wesentlichen dem Verbrennungsdruck entspricht, verdampft wird.

4. Gasturbinenprozess nach einem der Ansprüche 1 bis 3, **dadurch gekennzeichnet, dass** Wasserdampf und Brennstoff (3) für die Brennkammer (B) ausschließlich durch das mit Wasserdampf gesättigte Brennstoff-Dampf-Gemisch (14) zur Verfügung gestellt werden.

5. Gasturbinenprozess nach einem der Ansprüche 1 bis 4, **dadurch gekennzeichnet, dass** Erdgas als Brennsoff (10) eingesetzt wird.

6. Gasturbine (G) mit einem Verdichter (V), einer Brennkammer (B), einer Expansionsturbine (T) sowie einem mit der Brennkammer (B) und der Expansionsturbine (T) strömungstechnisch verbundenen Dampferzeuger (S), wobei über den Verdichter (V) Luft (1) komprimiert und in die Brennkammer (B) eingeleitet werden kann, um mit einem Brennstoff sowie Wasserdampf bei einem Verbrennungsdruck zu einem heißen Rauchgas (4) umgesetzt zu werden, das nach arbeitsleistender Entspannung in der Expansionsturbine (T) dem Dampferzeuger (S) zuführbar ist, wo seine Wärme dazu genutzt werden kann, Wasserdampf für die Einleitung in die Brennkammer (B) durch Verdampfung von Kesselwasser (7) zu erzeugen, **dadurch gekennzeichnet, dass** der Dampferzeuger (S) mit einer Brennstoffzuführung (Z) ausgeführt ist, über die dem zu verdampfenden Kesselwasser Brennstoff (10) zugemischt werden kann, um ein mit Wasserdampf gesättigtes Brennstoff-Dampf-Gemisch (14) für die Einleitung in die Brennkammer (B) zu erhalten.

7. Gasturbine nach Anspruch 6, **dadurch gekennzeichnet, dass** der Dampferzeuger (S) einen Überhitzer (E1) umfasst, mit dem das mit Wasserdampf gesättigte Brennstoff-Dampf-Gemisch (14) stromaufwärts der Brennkammer (B) unter Nutzung der Wärme von in der Expansionsturbine entspanntem Rauchgas (5) überhitzt werden kann.

8. Gasturbine nach einem der Ansprüche 6 oder 7, **dadurch gekennzeichnet, dass** der Dampferzeuger (S) eine Dampftrommel (D) aufweist, in die die Brennstoffzuführung (Z) mündet.

9. Gasturbine nach einem der Ansprüche 6 bis 8, **dadurch gekennzeichnet, dass** die Expansionsturbine (T) mit dem Verdichter (V) sowie einer Arbeitsmaschine (A) gekoppelt ist.
